# EUROPEAN PATENT APPLICATION

(11) **EP 2 599 601 A1**
(43) Date of publication of application: **05.06.2013**
(21) Application number: 12190363.7
(22) Date of filing: 29.10.2012
(51) Int. Cl.: B27G 19/02

(54) **Cutting machine guard**

(30) Priority: 29.11.2011 JP 2011260272
(71) Applicant: HITACHI KOKI CO., LTD., Tokyo 108-6020 (JP)
(72) Inventor: Fujiwara, Masahiro, Ibaraki, 312-8502 (JP)
(74) Representative: Popp, Eugen

(57) **Abstract**

A cutting machine is provided with: a vice for fixing a workpiece to be cut; a base on which the vice is provided; an arm attached to a front side of the base via a hinge and supported so as to be slidable in a direction away from and toward the base; a cutting grind stone driven so as to rotate by a driving unit provided at the arm; a wheel cover for covering an upper-side portion of the cutting grind stone; and an auxiliary cover extended from a front-side opening portion of the wheel cover to a rear side and attached to the wheel cover so as to be slidable thereon.

## Description

### TECHNICAL FIELD OF THE INVENTION

The present invention relates to a cutting machine that cuts a workpiece to be cut which is made of metal or others by rotating a cutting grind stone.

### BACKGROUND OF THE INVENTION

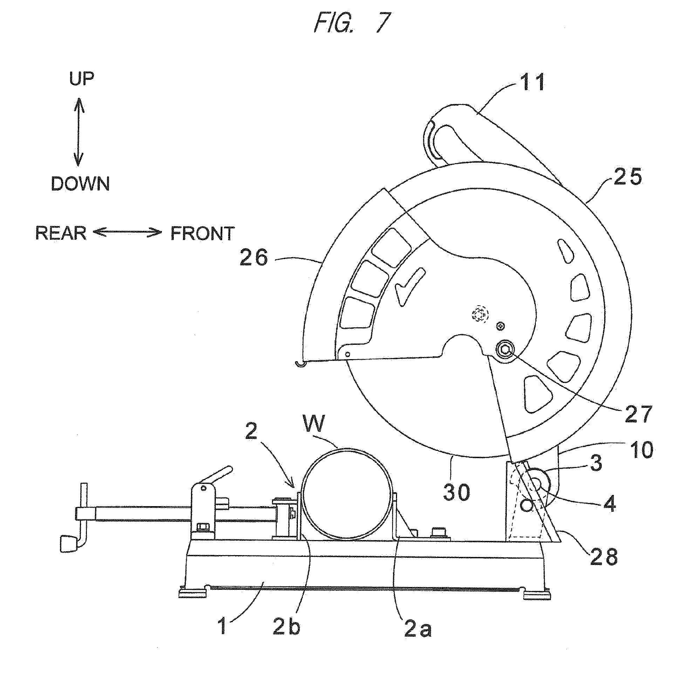

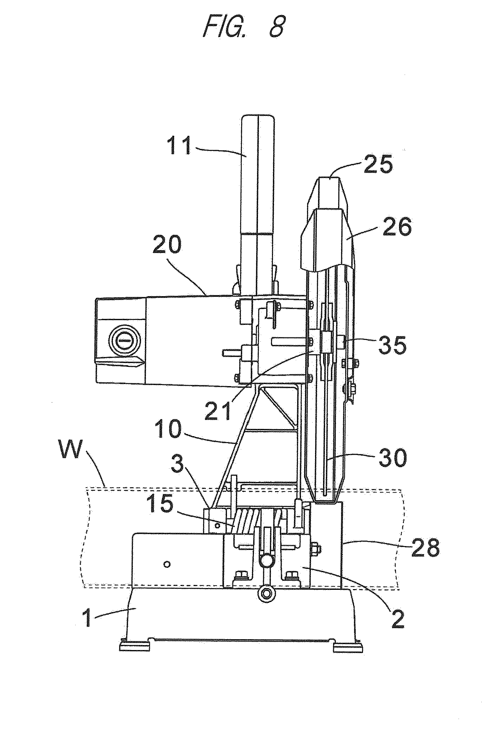

A conventional cutting machine of this type will be explained with reference to FIGs. 7 to 10. Note that a front/rear direction and an upward/downward direction are defined as illustrated by arrows in FIG. 7. In these drawings, a vice 2 is placed on a flat upper surface of a base 1. The vice 2 includes: a fixed vice portion 2a which is fixed on a front side of the base 1; and a moving vice portion 2b which is arranged on a rear side of the base 1 so as to be opposed thereto. A workpiece to be cut "W" such as a steel pipe is sandwiched by the fixed vice portion 2a and the moving vice portion 2b so as to be fixed and retained on the base 1. A hinge 3 is fixed on the front side of the base 1, and an arm 10 is attached to the hinge 3 by a hinge pin 4 so as to be rotatable in a plane vertical to the upper surface of the base 1. That is, the arm 10 is supported via the hinge 3 so as to be slidable in a direction away from and toward the base 1. Note that, as illustrated in FIG. 8, the arm 10 is biased by a spring 15 provided in a periphery of the hinge pin 4 so that an upper end thereof is distant from the base 1. An upper limit position of the arm 10 is regulated to a position illustrated in FIG. 7 (distant position from the base 1) by a stopper which is not illustrated.

As illustrated in FIG. 8, an operating handle 11 is fixedly attached to a tip end of the arm 10, and a driving unit 20 is attached thereto. The driving unit 20 is provided with an electric motor and a speed-reducing mechanism which reduces rotation thereof, and a cutting grind stone 30 serving as a cutting tool is fixed by a bolt 35 to an output shaft of the speed-reducing mechanism, that is, a rotation driving shaft 21 of the driving unit 20. The cutting grind stone 30 rotates in a plane vertical to the upper surface of the base 1.

A wheel cover 25 is fixed to the arm 10 side (driving unit 20) so as to cover at least an upper side portion of a space in a periphery of the cutting grind stone 30 which is rotated by the driving unit 20. A sub cover 26 extended downward from a rear-side opening portion of the wheel cover 25 is attached to the wheel cover 25 so as to be slidable thereon by an attachment member 27 such as a bolt. While the sub cover 26 tends to move downward (counterclockwise in FIG. 7) because of its own weight, a lower limit position thereof is regulated by a stopper which is not illustrated. Conversely, the sub cover 26 can rotate upward (clockwise). In a state that the sub cover 26 is not in contact with the workpiece to be cut W as illustrated in FIG. 7, the sub cover 26 is regulated to the lower limit position illustrated in FIG. 7. If the sub cover 26 is brought into contact with the workpiece to be cut W upon a cutting process of the workpiece to be cut W, the sub cover 26 can move upward to evacuate therefrom.

After the workpiece to be cut W is fixed to the base 1 by the vice 2, the handle 11 is operated in the state of FIG. 7 in a depressing direction so that the cutting grind stone 30 approaches the base 1. When the workpiece to be cut W is a steel pipe or others, a lot of sparks (cutting powders) are scattered at cutting start (FIG. 9) and during the cutting (FIG. 10) in a tangent direction (illustrated by an arrow P) of the cutting grind stone 30 which is rotating counterclockwise. In order to receive them, a spark chute 28 is provided on the front side of the upper surface of the base 1. The spark chute 28 has a shape that covers the space between the base 1 and the wheel cover 25.

As a publicly-known document which discloses a cutting machine of this type using a rotating cutting grind stone, there are Japanese Patent Application Laid-Open Publication No. 2010-69590 (Patent Document 1) and Japanese Patent Application Laid-Open Publication No. 2001-252822 (Patent Document 2).

A cutting machine disclosed in Patent Document 1 is provided with: a spark-scattering preventing cover which corresponds to the spark chute; and a plate having a space through which a cutting grind stone can pass. The plate is provided so as to partially cover an opening of a grind-stone cover. In this case, the plate prevents entering of the sparks or others generated in the cutting operation into the grind-stone cover.

A dust collecting apparatus disclosed in Patent Document 2 is framed with a stay, and is provided with a box whose outer side is covered with a flameproof sheet. In the box, a suction port connected to a suction apparatus is provided. In this case, an outer shape of the dust collecting apparatus is larger than a shape of a cutting apparatus.

### SUMMARY OF THE INVENTION

Conventionally, when a workpiece to be cut such as a steel pipe is cut by using a cutting machine, there are problems such as burn and stain generated by the lot of sparks scattered in the tangent direction of the cutting grind stone serving as the cutting tool. Also, in recent years, there is a tendency of strong demands for the prevention of the spark scattering. Therefore, the demands for the prevention of the spark scattering have not been sufficiently satisfied by only the spark chute illustrated in FIGs. 7 to 10 in some cases.

The present invention has been made in consideration of such circumstances, and a preferred aim thereof is to provide a cutting machine capable of effectively preventing spark scattering generated when a workpiece to be cut is cut by a cutting tool, which results in prevention of burn, stain, and others due to the sparks.

In order to achieve the above-described preferred aim, a cutting machine of an aspect of the present invention includes: a vice for fixing a workpiece to be cut; a base on which the vice is provided; an arm supported in front of the vice so as to be movable in a direction away from and toward the base; a driving unit provided at the arm, the driving unit having a cutting tool which is driven so as to rotate and a wheel cover for covering at least an upper-side portion of a space in a periphery of the cutting tool; and a first auxiliary cover attached so as to extend from a front-side opening portion of the wheel cover to the rear side and so as to be movable with respect to the driving unit.

According to the present invention, the portion from the front-side opening portion of the wheel cover to the rear side is covered with the auxiliary cover attached to the wheel cover so as to be slidable thereon, the wheel cover used for covering at least the upper-side portion of the space in the periphery of the cutting grind stone, and therefore, the scattering of sparks (cutting powders) generated when the workpiece to be cut is cut by the cutting grind stone is effectively prevented, which results in prevention of burn, stain, and others due to the sparks.

### BRIEF DESCRIPTIONS OF THE DRAWINGS

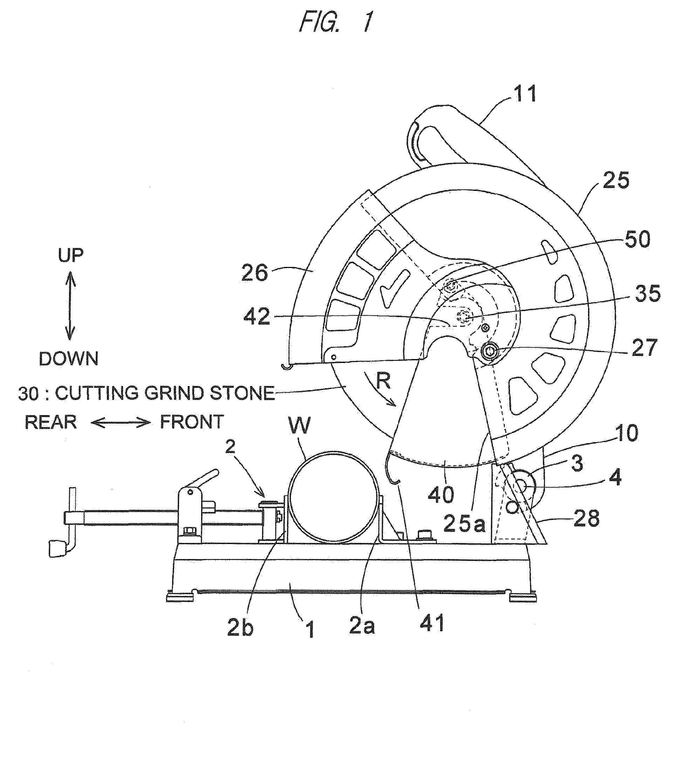

FIG. 1 is a side view illustrating an embodiment of a cutting machine according to the present invention and illustrating a state prior to a cutting operation;

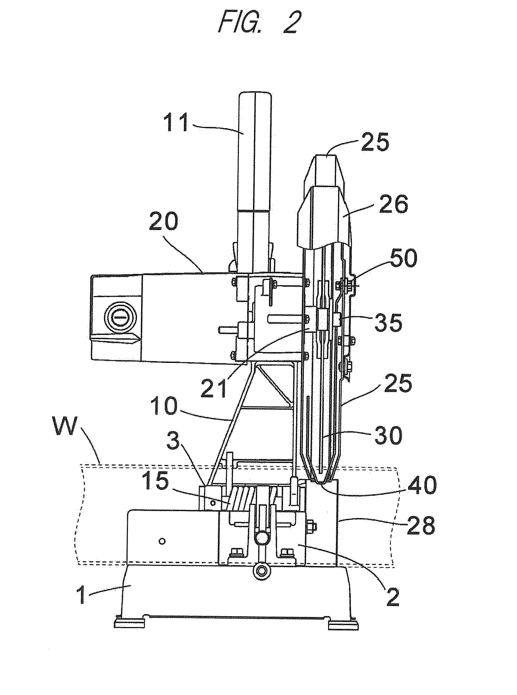

FIG. 2 is a front view illustrating the embodiment of the cutting machine according to the present invention, a part of which is illustrated as a cross section;

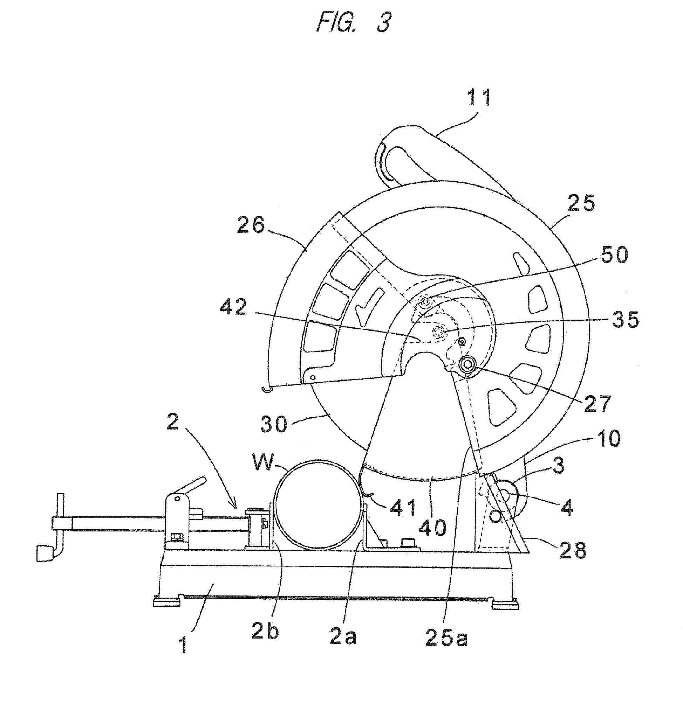

FIG. 3 is a side view illustrating a state that a curved portion of a lower end of an auxiliary cover is in contact with a workpiece to be cut by the cutting operation in the present embodiment;

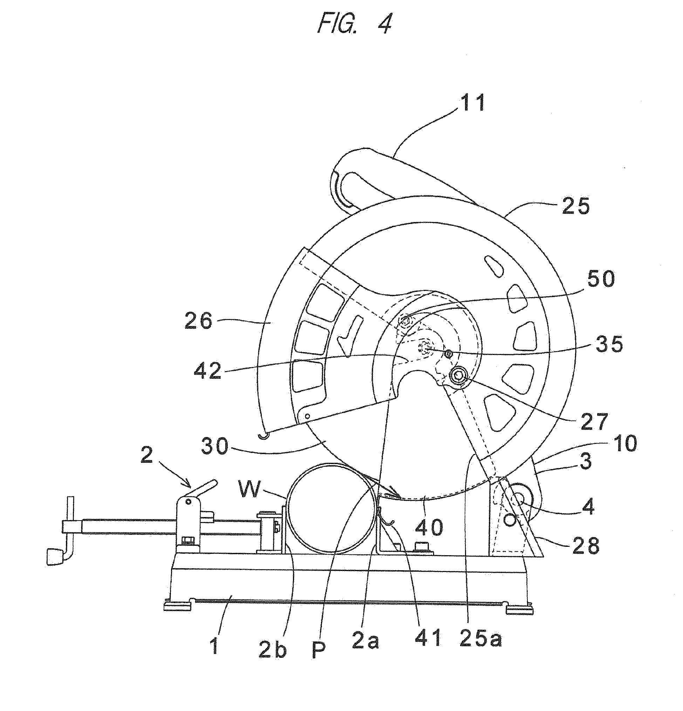

FIG. 4 is a side view illustrating a state that the cutting grind stone is in contact with the workpiece to be cut by the cutting operation;

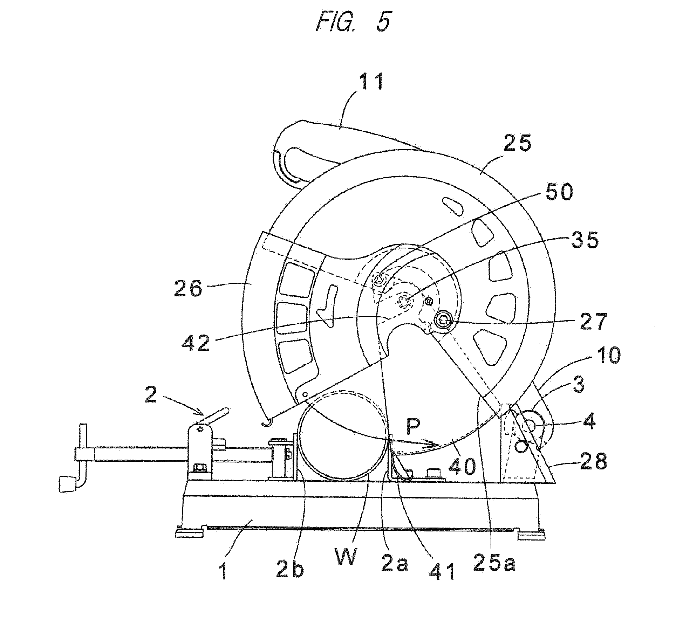

FIG. 5 is a side view illustrating a state that the curved portion of the lower end of the auxiliary cover is in contact with an upper surface of a base by the cutting operation;

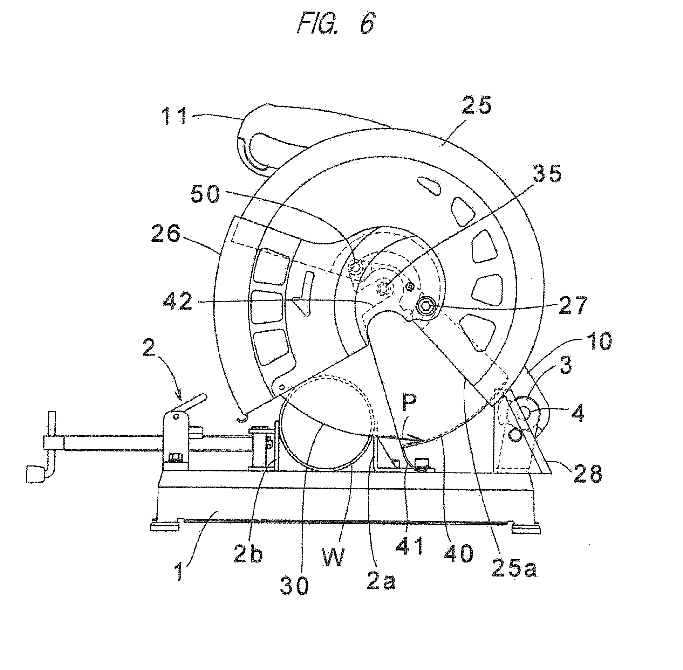

FIG. 6 is a side view illustrating a state that the curved portion of the lower end of the auxiliary cover is moved to a front side of the base by the cutting operation;
FIG. 7 is a side view illustrating a conventional cutting machine and illustrating a state prior to a cutting operation;
FIG. 8 is a front view illustrating a conventional cutting machine, a part of which is illustrated as a cross section;

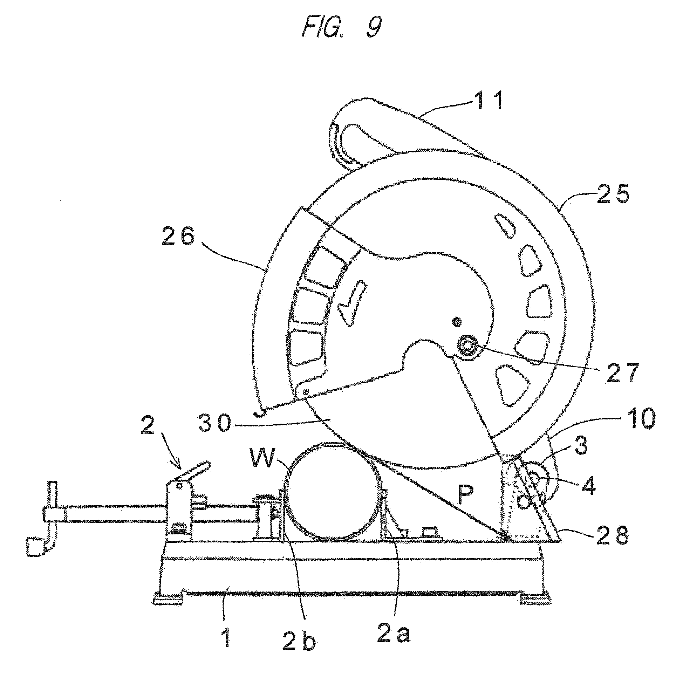

FIG. 9 is a side view illustrating a state at cutting start of a workpiece to be cut by the conventional cutting machine; and

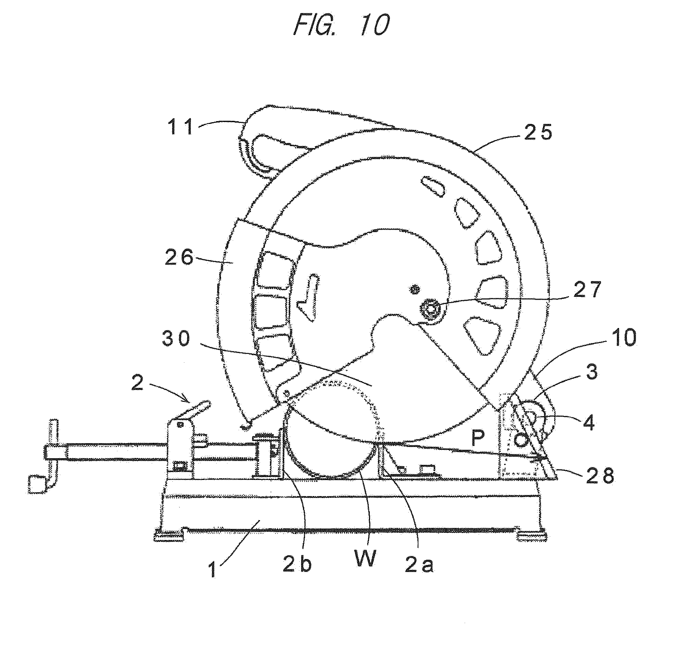

FIG. 10 is a side view illustrating a state during cutting of the workpiece to be cut by the conventional cutting machine.

### DESCRIPTIONS OF THE PREFERRED EMBODIMENT

Hereinafter, a preferred embodiment of the present invention will be described in detail with reference to drawings. Note that the same or similar components, members, processes, and others illustrated in each of the drawings are denoted by the same reference symbols, and repetitive explanation thereof will be appropriately omitted. Also, the embodiment does not limit the invention but exemplifies the same, and all the characteristics and combinations thereof described in the embodiment are not always necessarily essential in the present invention.

FIGs. 1 to 6 are drawings illustrating the embodiment of the cutting machine according to the present invention. The cutting machine illustrated in FIGs. 1 to 6 has a structure with attaching an auxiliary cover (first auxiliary cover) 40 to a wheel cover 25 in order to prevent scattering of sparks (cutting powders) upon cutting in addition to a structure of a conventional cutting machine illustrated in FIGs. 7 to 10. The auxiliary cover 40 is attached to the wheel cover 25 so as to be slidable thereon by an attachment member 50 such as a bolt and a nut, and is weighed down with its own weight. The wheel cover 25 covers at least an upper-side portion of a space in a periphery of a cutting grind stone 30 (for example, 50% or more of the space in the periphery of the cutting grind stone 30) which is driven so as to rotate by a driving unit 20 having an electric motor embedded therein but not illustrated. The auxiliary cover 40 is extended from a front-side opening portion 25a of the wheel cover 25 to the rear side so as to cover a peripheral space of the cutting grind stone 30 between the wheel cover 25 and a workpiece to be cut W which is fixed by a vice 2. Note that a front/rear direction and an upward/downward direction are defined as illustrated by arrows in FIG. 1. Also, a rotating direction of the cutting grind stone 30 is a (counterclockwise) direction of an arrow "R" in FIG. 1.

As illustrated in FIG. 2, the auxiliary cover 40 has a cross section whose shape is a substantially U-shape so as to cover lower portions of both side surfaces of the cutting grind stone 30 and a bottom surface side thereof. The auxiliary cover 40 can move inside the wheel cover 25 as taking a shaft portion of the attachment member 50 as a rotational center, and a part of the auxiliary cover 40 enters into the wheel cover 25. Also, a curved portion 41 serving as a contact portion is provided at a rear-side lower end portion of the auxiliary cover 40 (so as to be integrally formed therewith) . A tip end of the curved portion 41 is bent to curve toward the front side so as to contact with the workpiece to be cut W on a convex surface thereof.

While the cutting grind stone 30 is fixed to a rotation driving shaft 21 of the driving unit 20 by a bolt 35 with using an attachment fitting in combination, a cut-away portion 42 for avoiding the bolt 35 is formed in the auxiliary cover 40. By this cut-away portion 42, the bolt 35 is exposed when a sub cover (second auxiliary cover) 26 for covering a rear side of the wheel cover 25 is lifted up. Therefore, the cutting grind stone 30 can be easily replaced by detaching the bolt 35.

When the handle 11 is depressed in the state prior to the cutting operation illustrated in FIG. 1 so that the arm 10 approaches the base 1, the curved portion 41 of the auxiliary cover 40 is first brought into contact with the workpiece to be cut W as illustrated in FIG. 3. A contact position of the curved portion 41 with the workpiece to be cut W is on a front side further than an intermediate point of the vice 2. Then, the position of the auxiliary cover 40 is regulated by the contact of the curved portion 41 with the workpiece to be cut W until the state illustrated in FIGs. 4 and 5 is achieved, and, when the state illustrated in FIG. 4 is achieved by the depression of the handle 11, the cutting of the workpiece to be cut W is started. At this time, a part of the cutting grind stone, which is on the front side further than the contact portion of the cutting grind stone 30 with the workpiece to be cut W which is fixed by the vice 2, is covered with the auxiliary cover 40. Therefore, most of the sparks (cutting powders) scattered in the tangent direction (illustrate by the arrow P) along with the cutting enters the inside of the auxiliary cover 40. Also, the rest of the sparks is blocked by a spark chute 28. Therefore, the scattering of the sparks is effectively prevented.

As advancing the cutting of the workpiece to be cut W by the cutting grind stone 30 as illustrated in FIG. 5, the curved portion 41 is brought into contact with the upper surface of the base 1. When the handle 11 is further depressed, the curved portion 41 of the auxiliary cover 40 is moved (slid) toward the front side along the upper surface of the base 1 as illustrated in FIG. 6, so that the auxiliary cover 40 does not prevent the depression of the handle 11 (the advance of the cutting). The auxiliary cover 40 can move until the cutting of the workpiece to be cut W is finished.

According to the present embodiment, the following effects can be achieved.
(1) When the workpiece to be cut W is cut by the cutting grind stone 30, the scattering of the sparks is effectively prevented by covering the portion from the front-side opening portion 25a of the wheel cover 25 to the rear side with the auxiliary cover 40 which is attached so as to be slidable to the wheel cover 25 for covering at least the upper-side portion of the space in the periphery of the cutting grind stone 30. That is, conventionally, the cutting grind stone 30 between the workpiece to be cut W and the wheel cover 25 is exposed, and therefore, the sparks are scattered from the exposed portion. However, by covering the part (the exposed portion) of the cutting grind stone between the workpiece to be cut W and the wheel cover 25 with the auxiliary cover 40, the scattering of the sparks is prevented.
(2) Upon the cutting start by the cutting grind stone 30, the rear end of the auxiliary cover 40 is positioned on the rear side further than the fixed vice portion 2a (serving as a front-side vice portion) of the vice 2. Therefore, the cutting operation can be performed as maintaining the state that the auxiliary cover 40 is in contact with the workpiece to be cut W. As a result, the exposed portion of the cutting grind stone between the auxiliary cover 40 and the workpiece to be cut W is reduced, so that the scattering of sparks is prevented.
(3) The curved portion 41 is provided at the rear-side lower end portion of the auxiliary cover 40. At the beginning of the downward movement of the auxiliary cover 40 along with the depression of the handle 11, the curved portion 41 is brought into contact with the workpiece to be cut W, and is moved forward. As advancing the cutting of the workpiece to be cut W, the curved portion 41 is brought into contact with the upper surface of the base 1 so as to slide on the upper surface of the base 1 and move forward. Therefore, the auxiliary cover 40 does not prevent the cutting operation, so that an area where the auxiliary cover 40 covers the cutting grind stone 30 can be sufficiently expanded.
(4) The auxiliary cover 40 is structured to be attached to the wheel cover 25 so as to be slidable thereon and to weigh down with its own weight, and therefore, the scattering of the sparks can be effectively prevented by a simple structure.
(5) The sub cover 26 is extended downward from the rear-side opening portion of the wheel cover 25, and is attached to the wheel cover 25 so as to be slidable thereon in a predetermined range. Therefore, even if the sparks that have entered the inside of the wheel cover 25 move around therein and are ejected from the rear-side opening portion, the ejection of the sparks toward an operator side is prevented by the sub cover 26.

In the foregoing, the present invention has been explained with exemplifying the embodiment. It is understood by those skilled in the art that various modifications can be made for each component and each process of the embodiment within the scope of the claims. Hereinafter, a modification example will be mentioned.

In the above-described embodiment, a part of the auxiliary cover enters the inside of the wheel cover and moves therein. However, the auxiliary cover may be attached to an outside of the wheel cover so as to be slidable thereon. For example, a part of the sub cover may enter the inside of the wheel cover, and a part of the auxiliary cover may be overlapped with the outside of the wheel cover.

As the contact portion provided in the auxiliary cover, the curved portion whose tip end is curved forward so as to be in contact with the workpiece to be cut W at the convex surface thereof has been exemplified. However, a shape of a contact member is arbitral as long as a function similar to that of the curved portion is achieved. For example, a roller serving as the contact portion can be provided in the rear-side lower end portion of the auxiliary cover.

## Claims

1. A cutting machine including:
a vice for fixing a workpiece to be cut and a base on which the vice is provided;
an arm supported on a front side of the vice so as to be movable in a direction away from and toward the base; and
a driving unit provided at the arm, the driving unit having a cutting tool which is driven so as to rotate and a wheel cover for covering at least an upper-side portion of a space in a periphery of the cutting tool, **characterized in that**
a first auxiliary cover extended from a front-side opening portion of the wheel cover to a rear side is movable with respect to the driving unit.

2. The cutting machine according to claim 1, **characterized in that**
the first auxiliary cover moves inside the wheel cover.

3. The cutting machine according to claim 1, **characterized in that**
the first auxiliary cover covers a part of the cutting tool on a front side further than a contact portion of the cutting tool with the workpiece to be cut which is fixed by the vice.

4. The cutting machine according to claim 1, **characterized in that**,
when the first auxiliary cover is not in contact with the workpiece to be cut which is fixed by the vice, the first auxiliary cover weighs down from the wheel cover with its own weight.

5. The cutting machine according to claim 3, **characterized in that**
a rear end of the first auxiliary cover is positioned on a rear side further than a front-side vice of the vice upon cutting start by the cutting tool.

6. The cutting machine according to claim 3, **characterized in that**
a contact portion is provided at a rear-side lower end portion of the first auxiliary cover, and
the contact portion is in contact with the workpiece to be cut on the front side further than an intermediate point of the vice.

7. The cutting machine according to claim 6, **characterized in that**
the contact portion is brought into contact with the base as the arm approaches the base, and moves in a direction toward the front side of the base.

8. The cutting machine according to claim 1, **characterized in that**
a second auxiliary cover attached to the wheel cover so as to be slidable in a predetermined range is extended downward from a rear-side opening portion of the wheel cover.
